# EUROPÄISCHE PATENTSCHRIFT

(11) **EP 3 416 870 B1**
(45) Veröffentlichungstag und Bekanntmachung des Hinweises auf die Patenterteilung: **20.11.2019**
(21) Anmeldenummer: 17703429.5
(22) Anmeldetag: 07.02.2017
(51) Int. Cl.: B62D 1/181, B62D 1/183

(54) **MOTORISCH VERSTELLBARE LENKSÄULE FÜR EIN KRAFTFAHRZEUG**
MOTOR-ADJUSTABLE STEERING COLUMN FOR A MOTOR VEHICLE
COLONNE DE DIRECTION RÉGLABLE PAR MOTEUR POUR VÉHICULE AUTOMOBILE

(30) Priorität: 18.02.2016 DE 102016202465
(43) Veröffentlichungstag der Anmeldung: 26.12.2018
(73) Patentinhaber: ThyssenKrupp Presta AG, 9492 Eschen (LI); thyssenkrupp AG, 45143 Essen (DE)
(72) Erfinder: HUBER, Sebastian, 6811 Göfis (AT)
(74) Vertreter: thyssenkrupp Intellectual Property GmbH
(86) Internationale Anmeldenummer: PCT/EP2017/052576
(87) Internationale Veröffentlichungsnummer: WO 2017/140526

(56) Entgegenhaltungen:
- JP-A- 2006 224 867
- JP-A- 2007 090 977
- US-A1- 2014 305 252

## Beschreibung

### Stand der Technik

Die Erfindung betrifft eine motorisch verstellbare Lenksäule für ein Kraftfahrzeug, umfassend eine mit einer Fahrzeugkarosserie verbindbare Trageinheit, von der eine Stelleinheit gehalten ist, die eine in einer Manteleinheit um eine Längsachse drehbar gelagerte Lenkspindel umfasst, wobei die Manteleinheit ein Außenmantelrohr aufweist, in dem ein Innenmantelrohr in Richtung der Längsachse teleskopierend axial verschiebbar aufgenommen ist, und mit einem Stellantrieb, der mit dem Innenmantelrohr und dem Außenmantelrohr verbunden ist und von dem das Innenmantelrohr relativ zum Außenmantelrohr axial ein- und ausschiebbar ist.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist in einer Stelleinheit drehbar gelagert, die mit der Fahrzeugkarosserie über eine Trageinheit verbunden ist, welche zur Verbindung mit der Fahrzeugkarosserie beispielsweise Konsolenteile umfasst, welche die Stelleinheit halten. Die Verstellung ermöglicht zum einen die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann. Der Verstellbereich möglicher Fahr- oder Bedienpositionen wird als Komfort-Positionierbereich bezeichnet. Zum anderen kann das Lenkrad, wenn kein manueller Lenkeingriff durch den Fahrer erforderlich ist, wie beispielsweise beim autonomen Fahren, in eine Verstauposition außerhalb möglicher Bedienpositionen der Betriebsstellung gebracht werden, um den dadurch freiwerdenden Fahrzeuginnenraum alternativ nutzen zu können. Dazu wird die Lenksäule außerhalb des Komfort-Positionierbereichs verstaut, indem das Innenmantelrohr - auch als inneres Mantelrohr oder Innenmantel bezeichnet - maximal in Längsrichtung, d.h. in Richtung der Längsachse in Fahrtrichtung nach vorn in das Außenmantelrohr - auch als äußeres Mantelrohr, äußere Manteleinheit oder Führungskasten bezeichnet - eingefahren wird, wodurch der Abstand des Lenkrads zur Fahrerposition maximiert wird. In der Regel ist das Lenkrad einer verstellbaren Lenksäule auch in der Höhe verstellbar, indem die Stelleinheit an der Trageinheit um eine quer zur Längsachse liegende Schwenkachse höhenverschwenkbar gelagert ist. Dadurch, dass die Stelleinheit in die höchste mögliche Höhenstellung verschwenkt wird, kann sie in die vertikale Verstauposition gebracht werden.

Es ist im Stand der Technik bekannt, zum Verstellen der Stelleinheit relativ zur Trageinheit einen motorischen Stellantrieb vorzusehen, der beispielsweise einen Elektromotor umfasst, der über ein Getriebe an die Stelleinheit angekoppelt ist und eine elektrische Steuerung der Lenkradpositionierung ermöglicht.

Bei einer gattungsgemäßen Lenksäule ist für die Längsverstellung ein linearer motorischer Stellantrieb zwischen dem Innen- und Außenmantelrohr eingesetzt. Durch den Stellantrieb können die Mantelrohre in Richtung der Längsachse relativ zueinander translatorisch bewegt werden, so dass das Innenmantelrohr relativ zum Außenmantelrohr teleskopierend aus- oder eingefahren werden kann. Der Stellantrieb kann beispielsweise durch einen Spindeltrieb realisiert werden, der eine auf eine Gewindespindel aufgeschraubte Spindelmutter umfasst, die von einem Elektromotor relativ zueinander zur Spindel drehend antreibbar ist.

Ein Vorteil motorisch verstellbarer Lenksäulen ist, dass zur Erhöhung des Fahr- und Bedienkomforts Lenkradpositionen innerhalb des Komfort-Positionierbereichs motorisch einstellbar sind und auch individuelle Lenkradpositionen elektronisch gespeichert und bei Bedarf automatisch abgerufen und eingestellt werden können. Außerdem kann die Lenksäule automatisiert in die Verstauposition außerhalb des Komfort-Positionierbereichs eingefahren werden.

Grundsätzlich ist es denkbar und möglich, eine motorisch verstellbare Lenksäule mit einem hinreichend großen Verstellweg in Richtung der Längsachse in Längsrichtung sowohl innerhalb des Komfort-Positionierbereichs zu verstellen, als auch das Innenmantelrohr über den Komfort-Positionierbereich hinaus maximal in das Außenmantelrohr bis in die Verstauposition einzufahren. Dabei muss sichergestellt sein, dass in jeder möglichen Bedienposition in Betriebsstellung die Stelleinheit eine möglichst hohe Steifigkeit hat, welche durch möglichst geringes Spiel zwischen den Mantelrohren erreicht werden kann. Gleichzeitig soll gewährleistet sein, dass sich die Stelleinheit möglichst schnell in die und insbesondere aus der Verstauposition bewegt werden kann, wozu die Reibungskraft beim relativen Verschieben der Mantelrohre möglichst gering sein soll, damit der Stellantrieb nicht übermäßig leistungsfähig dimensioniert werden muss. Die dazu erforderliche Verringerung der Reibungskraft durch Erhöhung des Spiels zwischen den Mantelrohren würde jedoch die Steifigkeit der Stelleinheit und die Eigenfrequenz der Lenksäule verringern, was nicht hinnehmbar ist. Aufgrund dieses Zielkonflikts sind bekannte motorisch verstellbare Lenksäulen zum automatischen Verstauen einer Lenksäule nicht geeignet.

Um den beschriebenen Zielkonflikt zu lösen, wird in der WO2014/125174 A1 gattungsgemäße verstaubare Lenksäule beschrieben, welche separate Stellantriebe zur Verstellung in Längsrichtung und in Höhenrichtung aufweist, sowie einen dritten Stellantrieb, der einen zusätzlichen Teleskop-Verstellmechnismus zur Verstauung in Längsrichtung aufweist. Dieser bekannte Aufbau ist jedoch komplex, technisch aufwendig und schwer.

Angesichts der vorangehend erläuterten Problematik ist es eine Aufgabe der vorliegenden Erfindung, eine motorisch verstellbare Lenksäule für ein Kraftfahrzeug der eingangs genannten Art zur Verfügung zu stellen, die einen einfacheren Aufbau bei gleichzeitig hoher Steifigkeit und hoher Verstellgeschwindigkeit beim Einstellen bzw. Verlassen der Verstauposition.

### Darstellung der Erfindung

Diese Aufgabe wird durch eine Lenksäule für ein Kraftfahrzeug mit den Merkmalen des Anspruchs 1 gelöst. Vorteilhafte Weiterbildungen ergeben sich aus den Unteransprüchen.

Erfindungsgemäß wird vorgeschlagen, dass zwischen dem Außenmantelrohr und dem Innenmantelrohr eine Friktionseinrichtung angeordnet ist, von der eine Reibungskraft zwischen Außenmantelrohr und Innenmantelrohr bezüglich einer relativen Verschiebung aufbringbar ist und die verstellbar ist zwischen einer Freigabestellung und mindestens einer Friktionsstellung, wobei die Reibungskraft in Friktionsstellung höher ist als in Freigabestellung und wobei die Reibungskraft in Freigabestellung und in Friktionsstellung kleiner ist als eine von dem Stellantrieb zwischen dem Außenmantelrohr und Innenmantelrohr ausübbare axiale Verstellkraft.

Erfindungsgemäß kann mittels der Friktionseinrichtung bei einer relativen Verstellung in Längsrichtung die Reibungskraft zwischen den Mantelrohren, die dem Reibungs- bzw. Verstellwiderstand entspricht und die einer axialen Verstellkraft der Stelleinrichtung zur relativen axialen Verstellung entgegenwirkt, abhängig vom Verstellbereich vorgegeben werden. Zur Verstellung innerhalb des Komfort-Positionierbereichs wird die Friktionseinrichtung in Friktionsstellung geschaltet. Dabei wird die Reibungskraft beispielsweise durch Verringerung des Spiels zwischen der Außenseite des Innenmantelrohrs und der Innenseite des Außenmantelrohrs und/oder eine Vergrößerung der zwischen Innen- und Außenmantelrohr wirkenden, die Reibungskraft bestimmenden Andruckkräfte so vorgegeben, dass die Stelleinheit eine hinreichend große Steifigkeit hat. Dies kann beispielsweise dadurch erreicht werden, dass das Innenmantelrohr im Außenmantelrohr verklemmt oder verspannt wird, so dass eine steife Verbindung gebildet wird. Aufgrund der dabei relativ hohen Reibungskraft wird durch den Stellenantrieb eine relativ langsame Verstellung in Längsrichtung zur Einstellung der Lenkradposition innerhalb des Komfort-Einstellbereichs ermöglicht. Für diese an sich von motorisch verstellbaren Lenksäulen bekannte Positionierungsmöglichkeit kann als Stellantrieb ein elektrischer Stellmotor in einer üblichen Dimensionierung eingesetzt werden.

Die Friktionseinrichtung kann bevorzugt auch als Spannvorrichtung bezeichnet werden. Die bevorzugt als Spannvorrichtung wirkende Friktionsvorrichtung verspannt in der Friktionsstellung das Innenmantelrohr in dem Außenmantelrohr.

Bevorzugt kann das Außenmantelrohr in einem weiteren zusätzlichen Mantelrohr, bevorzugt verschiebbar gegenüber dem zusätzlichen Mantelrohr, aufgenommen sein und/oder kann in dem Innenmantelrohr ein weiteres zusätzliches Mantelrohr, bevorzugt verschiebbar gegenüber dem Innenmantelrohr, aufgenommen sein. Alternativ oder zusätzlich kann es vorgesehen sein, dass zwischen dem Innenmantelrohr und dem Außenmantelrohr ein weiteres zusätzliches Mantelrohr vorgesehen ist, das gegenüber dem Innenmantelrohr und/oder gegenüber dem Außenmantelrohr verschiebbar ist. Durch diese Ausführungsvarianten kann eine Mehrfachteleskop-Manteleinheit, mit einer Vielzahl von Mantelrohren die ineinander geschachtelt sind, geschaffen werden. Dadurch kann eine Manteleinheit bereitgestellt werden, die einen großen Verstellweg gewährleistet und gleichzeitig einen geringen Bauraum bedarf, wenn die Mantelrohre ineinander teleskopiert sind.

Soll die Lenksäule mit möglichst hoher Verstellgeschwindigkeit aus der Verstauposition in die Bedienposition oder aus der Bedienposition in die Verstauposition bewegt werden, wird die Friktionseinrichtung in die Freigabestellung geschaltet. Diese zeichnet sich dadurch aus, dass die Reibungskraft zwischen Innen- und Außenmantelrohr geringer ist als in der Friktionsstellung, beispielsweise durch Vergrößerung des Spiels und/oder der zwischen der Außenseite des Innenmantelrohrs und der Innenseite des Außenmantelrohrs wirkenden Andruckkräfte. Dadurch wird die Reibungskraft so weit verringert, dass ohne eine Erhöhung der vom Stellantrieb zur Verfügung stehenden Leistung, d.h. der Antriebskraft in Längsrichtung, eine schnellere Beschleunigung und eine höhere relative Verstellgeschwindigkeit der Mantelrohre als in der Friktionsstellung realisierbar ist. Mit anderen Worten kann der Teil der Leistung, die der Stellantrieb auf Grund der verringerten Reibung in der Freigabestellung für die Verstellung einspart, für eine schnellere Verstellgeschwindigkeit verwendet werden. Dies kann beispielsweise dadurch erreicht werden, dass das Innenmantelrohr im Außenmantelrohr weniger fest bzw. stark verklemmt oder verspannt wird, oder die Verklemmung vollständig gelöst wird. Dadurch kann das Innenmantelrohr leichtgängiger in Längsrichtung in dem Außenmantelrohr bewegt werden als in der Friktionsstellung. Die damit einhergehende zeitweilige Verringerung der Steifigkeit der Stelleinheit bzw. der Lenksäule in Freigabestellung ist hinnehmbar, da außerhalb des Komfort-Positionierbereichs keine Bedienung der Lenksäule erfolgt, d.h. kein manuelles Lenkmoment eingegeben wird.

Bevorzugt ist die Differenz zwischen dem Wert der aufzubringende Leistung des Stellantriebs für die Verstellung in der Freigabestellung und dem Wert der aufzubringende Leistung des Stellantriebs für die Verstellung in der Friktionsstellung kleiner ±20%, bevorzugt kleiner ±10% und ganz besonders bevorzugt ±5%.

Der eingangs genannte Zielkonflikt wird erfindungsgemäß dadurch gelöst, dass die Friktionseinrichtung innerhalb des Komfort-Positionierbereichs in Friktionsstellung gebracht wird, welche sich durch eine relativ hohe Reibungskraft und eine hohe Steifigkeit auszeichnet, und außerhalb des Komfort-Positionierbereichs in Friktionsstellung umgeschaltet wird, welche sich durch eine relativ geringe Reibungskraft und eine geringere Steifigkeit als in der Friktionsstellung auszeichnet. Dadurch kann auch dann, wenn die von dem Stellantrieb zwischen dem Außenmantelrohr und dem Innenmantelrohr ausübbare axiale Verstellkraft in Freigabestellung und in Friktionsstellung im Wesentlichen gleich ist, innerhalb des Komfort-Positionierbereichs eine relativ langsame Verstellung zur Einstellung der optimalen Lenkradposition erfolgen, und eine hohe Verstellgeschwindigkeit beim Verstellen aus der Verstauposition in den Komfort-Positionierbereich und beim Verstauen außerhalb des Komfort-Positionierbereichs in die Verstauposition realisiert werden. Dabei kann vorteilhafterweise ein an sich zur Längsverstellung einer Lenksäule bekannter Stellantrieb eingesetzt werden. Dabei ist weder eine größere Dimensionierung des Stellmotors, noch eine aufwendige Steuerung, noch ein aufwendiges Getriebe oder eine komplexer Aufbau wie im Stand der Technik erforderlich. Der erfindungsgemäße Aufbau ist einfacher, leichter und kostengünstiger realisierbar.

Ein wesentliches Merkmal der Erfindung ist, dass die Hauptfunktion der Friktionseinrichtung nicht ist, die Mantelrohre reibschlüssig miteinander zu fixieren, sondern mindestens zwei unterschiedliche Niveaus der Reibungskraft zur Verfügung zu stellen, die beide eine Verstellung der Lenksäule mittels des Stellantriebs in Längsrichtung zulassen. Die Niveaus können durch Umschaltung zwischen Friktions- und Freigabestellung aktiviert werden, wobei entweder eine leichtere Verstellbarkeit oder eine höhere Steifigkeit eingestellt wird.

Mittels einer erfindungsgemäßen Lenksäule kann ein erfindungsgemäßes Verfahren realisiert werden, welches dadurch gekennzeichnet ist, dass bei der Verstellung der Stelleinheit mittels eines Stellantriebs beim Verstellen in Betriebsstellung der Lenksäule innerhalb eines Komfort-Einstellbereichs eine Friktionseinrichtung in Friktionsstellung gebracht wird, und beim Verstauen der Lenksäule in Verstauposition die Friktionseinrichtung außerhalb des Komfort-Einstellbereichs in Freigabestellung gebracht wird, wobei in Friktionsstellung die Reibungskraft und die Steifigkeit der Verbindung zwischen dem Außenmantelrohr und dem Innenmantelrohr größer ist als in Freigabestellung.

Dadurch kann bedarfsgerecht in jeder möglichen Bedienstellung des Lenkrads eine Verstellung zur Anpassung der Lenkradposition an die Fahrerposition vorgenommen werden, wobei eine für einen Lenkeingriff hinreichend hohe Steifigkeit der Lenksäule gewährleistet ist. Durch die Umschaltung der Friktionseinrichtung außerhalb des Komfort-Positionierbereichs in die Freigabestellung kann eine leichte, reibungsarme Verstellung zum Wechsel aus der bzw. in die Verstauposition mit hoher Verstellgeschwindigkeit erfolgen.

Die Friktionseinrichtung kann an dem Außenmantelrohr angebracht sein. Beispielsweise kann sie eine fest mit dem Außenmantelrohr verbundene, vorzugsweise auf dessen Außenseite angeordnete Klemm- oder Spannvorrichtung aufweisen, welche in Reibungskontakt mit dem Innenmantelrohr gebracht werden kann. Die Klemm- oder Spannvorrichtung kann wahlweise in Friktionsstellung oder Freigabestellung geschaltet werden, wobei in Friktionsstellung das Innenmantelrohr mit einer höheren Reibungskraft als in der Freigabestellung in dem Außenmantelrohr in Längsrichtung verschiebbar gelagert ist wird, wodurch eine steifere Verbindung zwischen Innen- und Außenmantelrohr als in der Freigabestellung hergestellt wird. In der Freigabestellung wird die Klemm- oder Spannvorrichtung gelöst, indem das Spiel zwischen den miteinander verklemmten bzw. gegeneinander verspannten Flächen vergrößert wird oder die Andruckkraft zwischen diesen Flächen verringert wird. Dadurch wird die Reibungskraft zwischen den Mantelrohren verringert und dadurch die Verstellbarkeit erleichtert und die Steifigkeit im Vergleich zur Friktionsstellung reduziert.

Alternativ ist es auch denkbar und möglich, dass die Friktionseinrichtung eine an der Trageinheit angebrachte Klemm- oder Spannvorrichtung umfasst. Diese kann ebenfalls mit den Mantelrohren zusammenwirken, um die Reibungskraft und die Steifigkeit bedarfsgerecht zu erhöhen oder zu verringern.

Eine vorteilhafte Ausgestaltung der Erfindung sieht vor, dass die Friktionseinrichtung eine Andruckvorrichtung und mindestens ein Reibungselement mit einer Reibfläche aufweist, wobei die Andruckvorrichtung die Reibfläche in Friktionsstellung mit einer vorbestimmten Andruckkraft gegen eine Gleitfläche am Innenmantelrohr andrückt. Die Andruckvorrichtung ist vorzugsweise mit dem Außenmantelrohr fest verbunden, und das Reibungselement ist mit der Andruckvorrichtung verbunden, vorzugsweise fix in Richtung der Längsachse. Dadurch bestimmt die Reibungskraft zwischen der Reibfläche und einer an dem Innenmantelrohr ausgebildeten Gleitfläche die Reibungskraft zwischen den Mantelrohren bezüglich einer relativen Bewegung in Längsrichtung. Dabei ist die Reibungskraft umso größer, je größer der auf die Reibfläche wirkende Betrag der Andruckkraft (Normalkraft) ist. Entsprechend kann die Friktionseinrichtung in Friktionsstellung gebracht werden, indem eine vorbestimmte Andrucckraft ausgeübt wird, wodurch eine vorbestimmte Reibungskraft zwischen Reibfläche und damit zwischen Außen- und Innenmantelrohr vorgegeben wird. Gleichzeitig sorgt das von der Andruckvorrichtung gegen das Innenmantelrohr gespannte Reibungselement für eine Verklemmung oder Verspannung des Innenmantelrohrs, wobei eine Erhöhung der Andrucckraft für eine höhere Steifigkeit der Verbindung zwischen Innen- und Außenmantelrohr sorgt. Unter Verklemmung oder Verspannung ist nicht zu verstehen, dass zwischen dem Innenmantelrohr und dem Außenmantelrohr keine Relativbewegung stattfinden kann. Zur Umschaltung in Freigabestellung kann die wirkende Andruckkraft verringert oder aufgehoben werden, wodurch die Reibfläche von dem Innenmantelrohr gelöst oder zumindest das Spiel zwischen Reibfläche und Gleitfläche vergrößert wird, oder die von der Andruckkraft abhängige Reibungskraft zumindest verringert wird. Dadurch wird in jedem Fall gewährleistet, dass sich das Innenmantelrohr von dem Stellantrieb angetrieben leichter in Richtung der Längsachse in dem Außenmantelrohr verschieben lässt.

Das Reibungselement kann fest mit der Andruckvorrichtung verbunden sein, bespielsweise durch Befestigungselemente, Verbindungselemente oder auch durch eine einstückige Ausbildung. Es kann ebenfalls vorgesehen sein, dass zwischen der Andruckvorrichtung und dem Reibungselement ein Federelement angeordnet ist. Durch das Federelement wird die Reibfläche federnd elastisch gegen die Gleitfläche belastet. Dadurch kann der Verlauf der Andruckkraft, mit der die Reibfläche gegen die Gleitfläche an dem Innenmantelrohr angedrückt wird, in Abhängigkeit vom Abstand des Reibungselements von der Gleitfläche des Innenmantelrohrs vorgegeben werden. Dadurch ist es beispielsweise auch möglich, dass die Reibfläche in Freigabestellung federnd mit der Gleitfläche in Kontakt ist. In Friktionsstellung wird die erhöhte Andruckkraft über das Federelement auf das Reibungselement und damit auf die Reibfläche übertragen. Bevorzugt kann das Federelement als Schrauben- oder Tellerfeder ausgebildet sein.

In einer vorteilhaften Ausführung umfasst das Reibungselement einen Kunststoff, d.h. es ist entweder vollständig aus Kunststoff gefertigt, oder weist ein Kunststoffteil auf, oder ist vollständig oder zumindest teilweise mit einer Kunststoff-Beschichtung versehen. Der Kunststoff ist vorzugsweise im Bereich der Reibfläche angeordnet. Dadurch ergibt sich ein gleichmäßiges Reib- bzw. Gleitverhalten auf dem Innenmantelrohr und ein Festfressen sowie eine Veränderung der Reibungseigenschaften durch Korrosion oder dergleichen kann wirksam verhindert werden. Dabei sorgt der Einsatz eines Kunststoffs mit guten Gleiteigenschaften, wie beispielsweise PTFE, für einen verschleißarmen Langzeitbetrieb.

Weiterhin ist es vorteilhaft, dass das Reibungselement in einer in Längsrichtung begrenzten Durchbrechung in dem Außenmantelrohr angeordnet ist. Dabei ist das Reibungselement durch eine Öffnung in dem Außenmantelrohr hindurchgeführt, so dass es mit der Reibfläche von außen mit der Andruckkraft gegen die Außenfläche des koaxial in dem Außenmantelrohr geführten Innenmantelrohrs belastet werden kann. Dadurch, dass die Ausnehmung in Längsrichtung begrenzt ist, wird das Reibungselement bei einer Verstellung des Innenmantelrohrs in Längsrichtung formschlüssig an dem Außenmantelrohr abgestützt, wodurch die dabei ausgeübte Reibungskraft abgefangen wird.

Es ist vorteilhaft, dass die Andruckvorrichtung ein Krafterzeugungselement aufweist, welches sich am Außenmantelrohr oder an der Trageinheit abstützt. Das Krafterzeugungselement, auch als Andruckelement bezeichnet, stützt sich vorzugsweise an dem Außenmantelrohr ab und übt in Friktionsstellung die Andruckkraft auf das Reibungselement in Richtung gegen die Gleitfläche am Innenmantelrohr aus, wodurch die Reibfläche relativ zum Außenmantelrohr mit der Andruckkraft gegen die Gleitfläche an dem Innenmantelrohr belastet wird. Das Krafterzeugungselement kann passiv als elastisches Element ausgebildet sein, beispielsweise als Feder, welche das Reibungselement innerhalb des Komfort-Positionierbereichs die Reibfläche ohne äußere Energieversorgung gegen das Innenmantelrohr anpresst, oder alternativ als aktiver Aktuatur, beispielsweise als elektromagnetischer Aktuator, der zur Ein- oder Abschaltung der Friktionsstellung elektrisch schaltbar ist.

Es ist vorteilhaft, dass die Andruckvorrichtung ein Betätigungselement aufweist, welches aktivierbar ist zur Einstellung der Freigabestellung, wobei die Reibfläche von der Gleitfläche am Innenmantelrohr gelöst ist oder zumindest die Andruckkraft gegenüber der Friktionsstellung verringert ist. Durch die Betätigung des Betätigungselements kann die Andruckvorrichtung umgeschaltet werden zwischen der Friktionsstellung und der Freigabestellung. Die Betätigung kann beim Verlassen und Erreichen des Komfort-Positionierbereichs erfolgen, so dass eine automatische Umschaltung in die und aus der Freigabestellung erfolgt. Das Betätigungselement kann eine Mechanik aufweisen, welche bei Betätigung auf das Reibungselement eine der Andruckkraft entgegengesetzte Lösekraft ausübt, welche dafür sorgt, dass die Reibfläche von dem Innenmantelrohr entlastet bzw. gelöst wird, oder das Spiel zwischen Reibfläche und Innenmantelrohr vergrößert wird. Dadurch wird die Reibungskraft verringert.

Das Betätigungselement kann durch Verschwenken der Stelleinheit um die Schwenkachse in Wirkeingriff bringbar sein mit der Trageinheit zur Einschaltung der Freigabestellung.

Es kann vorgesehen sein, dass die Andruckvorrichtung einen an dem Außenmantelrohr schwenkbar gelagerten Hebel aufweist, der das Betätigungselement und ein Reibungselement aufweist. Die schwenkbare Lagerung des Hebels kann außen an dem Außenmantelroher angebracht sein und eine Schwenkachse aufweisen, die sich bevorzugt quer zur Längsachse erstreckt. Die Schwenkachse kann beispielsweise in einem Lagerbock drehbar gelagert sein, der auf dem Außenmantelrohr befestigt ist. Bevorzugt ist der Hebel als Doppelhebel ausgebildet, wobei an dem einen Hebelarm das Betätigungselement angeordnet ist oder der Hebelarm das Betätigungselement bildet. Zur Betätigung des Betätigungselements wird von außen eine Kraft auf diesen Hebelarm ausgeübt, so dass der Hebel relativ zum Außenmantelrohr verschwenkt wird. An dem anderen Hebelarm kann das Reibungselement angebracht sein, welches nach außen gerichtet von dem Innenmantelrohr radial abgehoben oder zumindest entlastet wird, wenn auf das Betätigungselement eine radial von außen gegen das Innenmantelrohr gerichtete Kraft ausgeübt wird. Durch das Längenverhältnis der Hebelarme kann die Kraftübersetzung zwischen der von dem Betätigungselement auf das Reibungselement übertragenen Betätigungskraft vorgegeben werden.

In einer vorteilhaften Ausführung ist die Stelleinheit an der Trageinheit um eine quer zur Längsachse liegende Schwenkachse höhenverschwenkbar gelagert. Durch die Verschwenkung um eine derartige horizontale Schwenkachse kann eine Höhenverstellung realisiert werden, bei der das am hinteren Ende der Lenkspindel angebrachte Lenkrad in der Höhe relativ zur Fahrerposition eingestellt werden kann.

Die vorgenannte Höhenverstellung kann manuell erfolgen. Insbesondere zum automatisierten Verstauen der Lenksäule beim bzw. zum autonomen Fahren ist es vorteilhaft, dass ein elektrischer Höhen-Stellantrieb mit der Trageinheit und der Stelleinheit verbunden ist, von dem die Stelleinheit relativ zur Trageinheit um die Schwenkachse bewegbar ist. Der Höhen-Stellantrieb ist an sich ebenfalls bekannt und kann beispielsweise als elektromotorisch angetriebener Spindeltrieb realisiert werden, wie vorangehend für die Längsverstellung beschrieben.

Eine vorteilhafte Ausführung der Erfindung sieht vor, dass das Betätigungselement durch Verschwenken der Stelleinheit um die Schwenkachse in Wirkeingriff bringbar ist mit der Trageinheit zur Einstellung der Freigabestellung, d.h. zur Umschaltung in oder aus der Freigabestellung. Dabei ist das Betätigungselement so an dem Außenmantelrohr angeordnet, dass es bei einer bestimmten Höhenposition der Höhenverstellung an der Trageinheit anschlägt und dadurch betätigt wird. Die vorgenannte Höhenposition bildet eine Umschaltposition, die sich außerhalb des Bedienbereichs der Lenksäule befindet und die beim Verstauen in vertikaler Richtung vor dem Erreichen oder beim Erreichen der vertikalen Verstauposition passiert wird, die sich üblicherweise im oberen Bereich der maximalen vertikalen Verstellhöhe befindet. Dabei wird die Friktionseinrichtung aus der Friktions- in die Freigabestellung umgeschaltet, so dass die Mantelrohre durch die dann verringerte Reibungskraft mit hoher Verstellbeschleunigung und Verstellgeschwindigkeit in Längsrichtung aus dem Komfort-Positionierbereich in die Verstauposition eingefahren werden können. Befindet sich die Stelleinheit in Verstauposition, ist das an der Trageinheit anliegende Betätigungselement aktiviert, d.h. betätigt, dass die Freigabestellung eingeschaltet ist. Dadurch können die Mantelrohre von dem Stellantrieb mit hoher Stellbeschleunigung und -geschwindigkeit bis in den Komfort-Positionierbereich ausgefahren werden.

Ein Vorteil der vorgenannten Ausführung ist, dass die Umschaltung der Friktionseinrichtung durch einen beim Verstauen vorgegebenen Bewegungsablauf selbsttätig erfolgt, so dass keine zusätzlichen Aktivierungs- oder Steuerungsmaßnahmen erforderlich sind. Dadurch kann mit geringem Aufwand ein Verfahren realisiert werden, welches vorsieht, dass die Friktionseinrichtung beim Erreichen einer Schaltposition durch Verschwenken der Stelleinheit um die Schwenkachse in Richtung auf die Verstauposition in Freigabestellung gebracht wird. Umgekehrt wird die Friktionseinrichtung - und zwar nachdem das Innenmantelrohr mit hoher Geschwindigkeit ausgefahren wurde - beim Eintritt in den Komfort-Positionierbereich durch Verschwenken der Stelleinheit um die Schwenkachse in Richtung auf die Betriebsstellung in Friktionsstellung gebracht wird. Dabei wird die Betätigung des Betätigungselements deaktiviert und dadurch selbsttätig die Friktionsstellung eingeschaltet.

Beim Verstauen werden folgende Schritte durchgeführt:
- Bewegen der Stelleinheit in Höhenrichtung in Richtung auf die Verstauposition zu, bis eine Schaltposition erreicht wird, wobei in die Freigabestellung umgeschaltet wird,
- Einfahren des Innenmantelrohrs in Längsrichtung in das Außenmantelrohr, bis die Verstauposition in Längsrichtung erreicht wird.

Zusätzlich kann vorgesehen sein, dass nach dem Einfahren des Innenmantelrohrs die Stelleinheit in Höhenrichtung verstellt wird, bis die Schaltposition erreicht wird, wobei in die Friktionsstellung umgeschaltet wird. Dadurch dann ein hohen Steifigkeit in der Verstauposition erreicht werden.

Entsprechend werden beim Verlassen der Verstauposition zum Einstellen der Bedienposition die zum Verstauen durchgeführten Schritte in umgekehrter Reihenfolge durchlaufen:
- Ausfahren des Innenmantelrohrs in Längsrichtung aus dem Außenmantelrohr heraus, bis der Komfort-Positionionierbereich in Längsrichtung erreicht wird,
- Bewegen der Stelleinheit in Höhenrichtung aus der Verstauposition heraus, bis eine Schaltposition erreicht wird, wobei in die Friktionsstellung umgeschaltet wird.

Dadurch kann die Stelleinheit schnell in zunächst in Längsrichtung aus der Verstauposition herausbewegt werden, und anschließend durch den vertikalen Stellantrieb in die optimale Bedienhöhe eingestellt werden.

Es ist weiterhin vorteilhaft, dass eine Energieabsorptionseinrichtung zwischen der Trageinheit und der Stelleinheit oder dem Außenmantelrohr und dem Innenmantelrohr angeordnet ist. Eine derartige Energieabsorptionseinrichtung, aus als Crasheinrichtung bezeichnet, bildet ein wirksame Maßnahme zur Verbesserung der Insassensicherheit bei einem Fahrzeugzusammenstoß, dem sogenannten Crashfall oder Fahrzeugfrontalaufprall, bei dem der Fahrer mit hoher Geschwindigkeit auf das Lenkrad aufprallt. Um für eine kontrollierte Abbremsung eines auf das Lenkrad auftreffenden Körpers zu sorgen, kann zwischen der Trageinheit und der Stelleinheit, oder zwischen dem Außenmantelrohr und dem Innenmantelrohr, die im Normalbetrieb relativ zueinander fixiert sind, im Crashfall jedoch in Richtung der Längsachse zusammengeschoben werden, eine Energieabsorptionseinrichtung eingekoppelt. Diese setzt die eingeleitete kinetische Energie in plastische Verformung eines Energieabsorptionselements um, beispielsweise durch Aufreißen einer Reisslasche oder Verbiegen eines langgestreckten Biegeelements, etwa einem Biegedraht oder Biegestreifen, oder durch die Aufweitung eines Langloches mittels eines Bolzens oder durch die Dehnung eines Blechstreifens oder durch Abtrennen eines Spans mittels eines Hobels.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in nahezu vollständig in Längsrichtung ausgezogenem Zustand in einer schematischen perspektivischen Ansicht,
- Figur 2: die Lenksäule gemäß Figur 1 in zusammengeschobenen Zustand,
- Figur 3: die Lenksäule gemäß Figur 1 in einer anderen perspektivischen Ansicht von der gegenüberliegenden Seite,
- Figur 4: einen Längsschnitt entlang der Längsachse durch eine Lenksäule gemäß Figur 1 in Friktionsstellung in vollständig in Längsrichtung ausgefahrenem Zustand,
- Figur 5: einen Längsschnitt entlang der Längsachse durch eine Lenksäule gemäß Figur 1 in Freigabestellung in vollständig in Längsrichtung ausgefahrenem Zustand,
- Figur 6: einen Längsschnitt entlang der Längsachse durch eine Lenksäule gemäß Figur 1 in Freigabestellung in vollständig in Längsrichtung eingefahrenem Zustand,
- Figur 7: einen Längsschnitt entlang der Längsachse durch eine Lenksäule gemäß Figur 1 in Umschaltposition in vollständig in Längsrichtung eingefahrenem Zustand,
- Figur 8: eine Detaildarstellung einer erfindungsgemäßen Friktionseinrichtung in Friktionsstellung aus der Schnittdarstellung in Figur 1,
- Figur 9: eine zweite Ausführungsform einer erfindungsgemäßen Friktionseinrichtung in einer Darstellung wie in Figur 8,
- Figur 10: eine dritte Ausführungsform einer erfindungsgemäßen Friktionseinrichtung in einer Darstellung wie in Figur 8.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

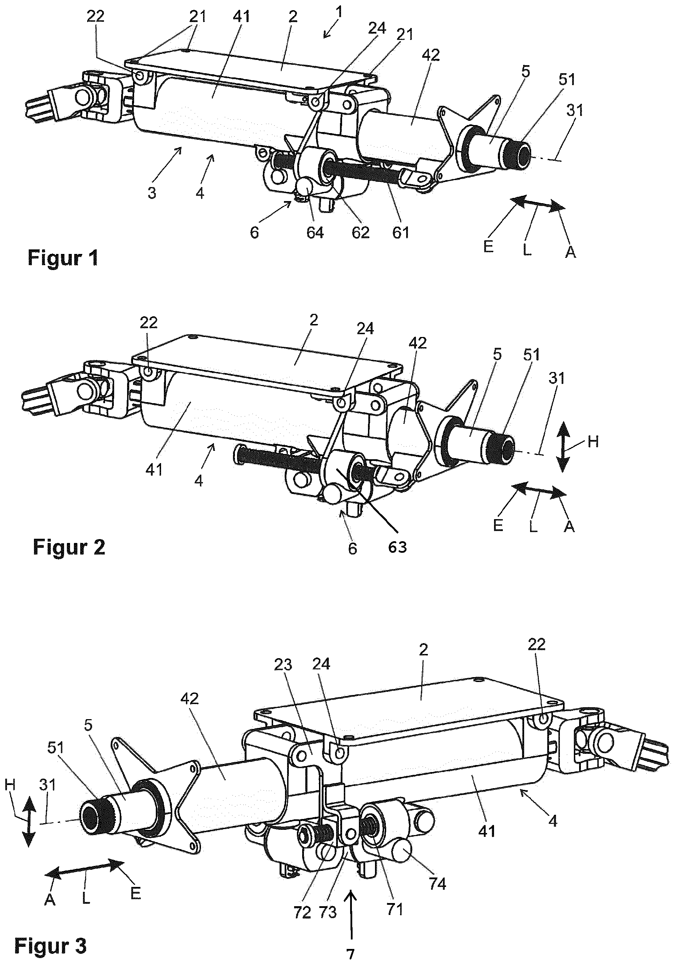

Figuren 1, 2 und 3 zeigen eine erfindungsgemäße Lenksäule 1 in schematischen perspektivischen Ansichten von seitlich oben schräg auf das hintere Ende, bezogen auf die Fahrtrichtung eines nicht dargestellten Fahrzeugs. Figur 2 zeigt den vollständig eingefahrenen bzw. eingezogenen Zustand, welcher der Verstauposition in Längsrichtung entspricht. Figuren 1 und 3 zeigen den ausgefahrenen bzw. ausgezogenen Zustand, welcher einer Längsposition innerhalb des Komfort-Positionierbereichs entspricht, von der linken Seite (Figur 1) sowie von der rechten Seite (Figur 3). Eine Längsposition innerhalb des Komfort-Positionierbereichs wird im Folgenden auch als Komfort-Position oder Komfort-Einstellung bezeichnet.

Die Lenksäule 1 umfasst eine Trageinheit 2, die Befestigungsmittel 21 aufweist zur Verbindung mit einer nicht dargestellten Kraftfahrzeug-Karosserie. Von der Trageinheit 2 wird eine Stelleinheit 3 gehalten, die eine Manteleinheit 4 umfasst, in der um eine Längsachse 31 der Stelleinheit 3 drehbar eine Lenkspindel 5 gelagert ist. An dem bezüglich der Fahrtrichtung hinteren Ende ist die Lenkspindel 5 mit einem Befestigungsabschnitt 51 zur Anbringung eines hier nicht dargestellten Lenkrads versehen.

In ihrem vorderen Endbereich ist die Manteleinheit 4 um eine quer zur Längsachse 31 liegende, horizontale Schwenkachse 22 verschwenkbar an der Trageinheit 2 gelagert. Im hinteren Endbereich ist die Manteleinheit 4 über einen Stellhebel 23 mit der Trageinheit 2 verbunden. Eine Drehbewegung des Stellhebels 23 um die Achse 24 bewirkt ein Verschwenken der Stelleinheit 3 um die Schwenkachse 22, und damit zu einer Verstellung des Lenkrads in Höhenrichtung H, was mit dem Doppelpfeil angedeutet ist.

Die Manteleinheit 4 umfasst in der dargestellten Ausführungsform ein Außenmantelrohr 41, und ein Innenmantelrohr 42. In dem äußeren Mantelrohr 41, welches bezüglich der Längsachse 31 in Längsrichtung L unverschiebbar an der Trageinheit 2 gelagert ist, ist das innere Mantelrohr 42 koaxial angeordnet und in Längsrichtung L parallel zur Längsachse 31 teleskopierend ein- und ausfahrbar angeordnet, was mit dem Doppelpfeil angedeutet ist. Dabei erfolgt das Ausfahren bzw. Ausziehen nach hinten in Ausfahrrichtung A, und das Einfahren bzw. Einziehen entsprechend in entgegengesetzter Richtung nach vorn in Einfahrrichtung E. Die Ausfahrrichtung A bezeichnet die Bewegungsrichtung parallel zur Längsachse 31 aus der Verstauposition in Richtung auf eine Bedienposition im Komfort-Positionierbereich; die Einfahrrichtung bezeichnet eine Verschiebung des Innenmantelrohrs 42 in dazu entgegengesetzter Richtung, also zur Verstauposition hin beim Verstauen.

Zur Längsverstellung, d.h. zum Ein- und Ausfahren, ist ein elektromotorischer Stellantrieb 6 vorgesehen. Dieser ist als Spindeltrieb ausgebildet und umfasst eine Schraubspindel 61, die sich parallel zur Längsachse 31 erstreckt und die mit ihrem hinteren Ende drehfest an dem inneren Mantelrohr 42 angebracht ist. Eine Spindelmutter 62 ist auf die Schraubspindel 61 aufgeschraubt und von einem elektrischen Stellmotor über ein Getriebe 64 drehend antreibbar, welches beispielsweise als Schneckengetriebe ausgebildet sein kann. Zusammen mit dem Getriebe 64 ist die Spindelmutter 62 bezüglich der Längsrichtung L fest, d.h. unverschiebbar mit dem äußeren Mantelrohr 41 verbunden, so dass eine Drehung je nach Drehrichtung eine Translation der Schraubspindel 61 in Einfahrrichtung E oder in Ausfahrrichtung A und damit ein Ein- oder Ausfahren des inneren Mantelrohrs 42 relativ zum äußeren Mantelrohr 41 bewirkt.

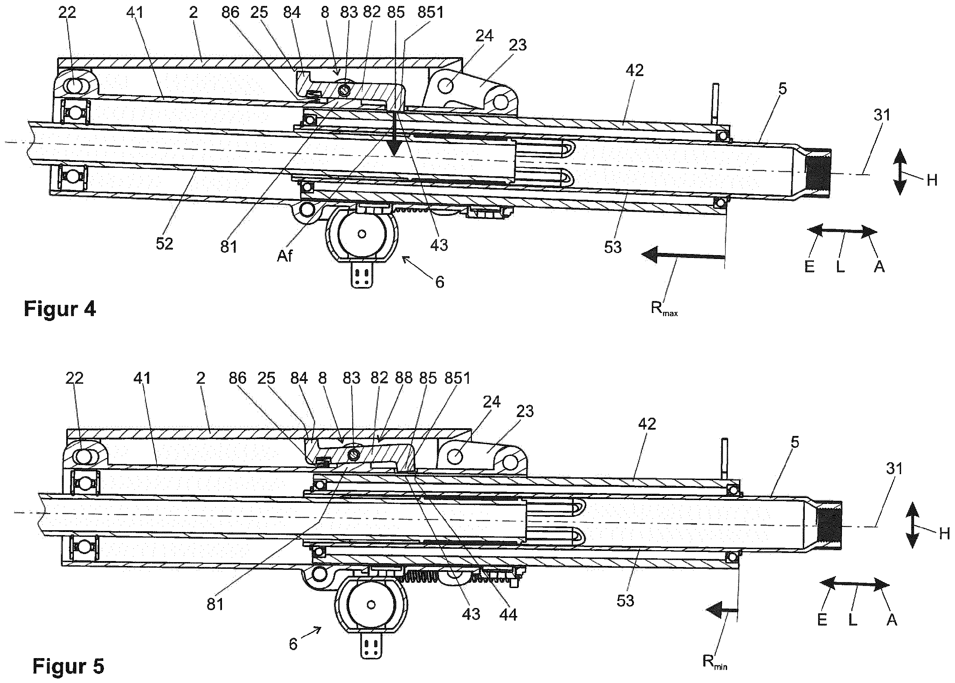

Die koaxiale Anordnung von innerem Mantelrohr 42 und äußerem Mantelrohr 41 ist besonders deutlich der Längsschnittdarstellung in den Figuren 4, 5, 6 und 7 entnehmbar. Daraus ist ebenfalls entnehmbar, dass die Lenkspindel 5 ebenfalls teleskopierbar aufgebaut ist mit einer inneren Lenkspindel 52 und einer äußeren Lenkspindel 53, die in Längsrichtung L ineinander verschiebbar sind und bezüglich einer Drehung zur Übertragung eines Lenkmoments formschlüssig verbunden sind.

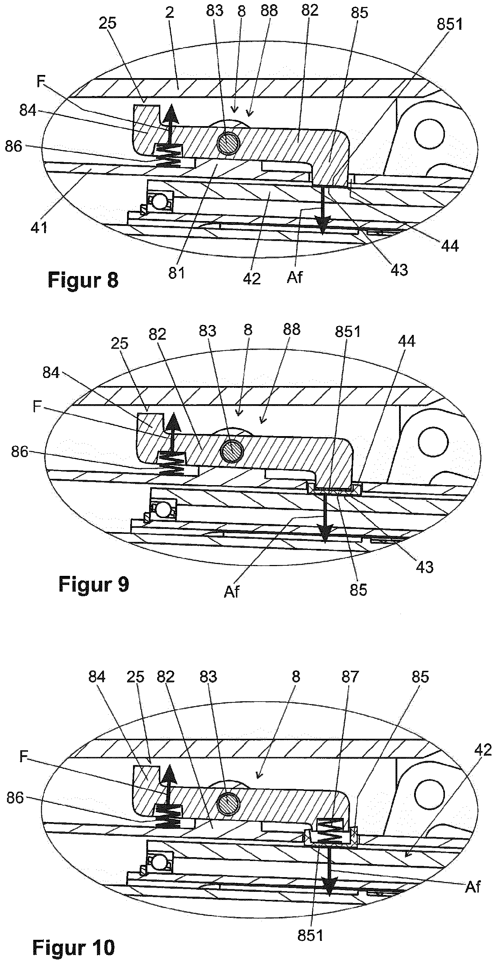

Die Lenksäule 1 weist eine Friktionseinrichtung 8 auf. Die Friktionseinrichtung 8 umfasst eine Andruckvorrichtung 88 mit einem Lagerbock 81, der außen mit dem Außenmantelrohr 41 fest verbunden ist. An dem Lagerbock 81 ist ein Hebel 82 um eine Hebelachse 83 schwenkbar gelagert ist, die sich quer zur Längsachse 31 erstreckt. Der Hebel 82 ist als Doppelhebel ausgebildet, der an einem Hebelarm ein Betätigungselement 84 aufweist und an dem anderen Hebelarm ein Reibungselement 85. Das Reibungselement 85 ist durch eine Ausnehmung bzw. Öffnung 44 in dem Außenmantelrohr 42 angeordnet bzw. radial nach innen durch diese hindurchgeführt, so dass es mit einer auf einer Reibfläche 851, die auf seiner dem Innenmantelrohr 42 zugewandten Seite ausgebildet ist. Die Reibfläche 851 kann dadurch mit einer außen an dem Innenmantelrohr 42 ausgebildeten Gleitfläche 43 in Gleit- bzw. Reibkontakt gebracht werden, wie deutlich aus der vergrößerten Darstellung in Figur 8 erkennbar ist.

Zwischen dem das Betätigungselement 84 tragenden Hebelarm und dem Außenmantelrohr 41 ist als Krafterzeugungselement eine Feder 86 eingesetzt, die als Druckfeder ausgebildet ist und das Betätigungselement 84 von den Mantelrohren 41 und 42 aus gesehen radial nach außen federnd belastet. Entsprechend wird von der Feder 86 das an dem anderen Hebelarm angeordnete Reibungselement 85 mit seiner Reibfläche 851 radial nach innen gegen die Gleitfläche 43 des Innenmantelrohrs 42 angedrückt.

Die Feder 86 übt eine radial nach außen gerichtete Federkraft F auf den Hebel 82 aus, so dass die Reibfläche 851 von der Andruckvorrichtung 88 mit einer Andruckkraft Af gegen die Gleitfläche 43 angedrückt wird, wie dies in der in Figur 8 dargestellten Friktionsstellung, die weiter unten noch erläutert wird, der Fall ist.

In der in Figur 4 dargestellten Situation befindet sich die Stelleinheit 3 in Bedienstellung bzw. Betriebsstellung innerhalb des Komfort-Positionierbereichs, bei der das Innenmantelrohr 42 maximal in Ausfahrrichtung A aus dem Außenmantelrohr 41 herausgefahren ist. Dabei wird die Reibfläche 851 des Reibungselements 85 von der Andruckvorrichtung 88 der Friktionseinrichtung 8 mit der Andruckkraft Af gegen die Gleitfläche 43 angedrückt, wodurch das Innenmantelmohr 42 in dem Außenmantelrohr 41 verklemmt bzw. verspannt ist, so dass eine hohe Steifigkeit der Stelleinheit 3 erreicht wird. Zur Längsverschiebung des Innenmantelrohrs 41 in Einfahrrichtung E muss von dem Stellantrieb 6 die in Längsrichtung zwischen dem Innenmantelrohr 42 und dem Außenmantelrohr 41 wirkende Reibungskraft Rmax überwunden werden. Für eine relativ langsame Verstellung zur Komfort-Positionierung des Lenkrads relativ zur Fahrerposition kann der Stellantrieb so dimensioniert sein, wie dies von bekannten motorisch verstellbaren Lenksäulen bekannt ist.

Wird die Stelleinheit 3 mittels des vertikalen Stellantriebs in die oberste Höhenposition bewegt, kommt das Betätigungselement 84 in Kontakt mit einer an dem Tragelement 2 ausgebildeten Kontaktfläche 25, wie in Figur 4 dargestellt. Der Kontakt mit der Kontaktfläche 25 markiert eine Umschaltposition, die sich außerhalb des Komfort-Positionierbereichs befindet und die beim Verstauen in vertikaler Richtung vor dem Erreichen oder beim Erreichen der vertikalen Verstauposition passiert wird, die sich üblicherweise im oberen Bereich der maximalen vertikalen Verstellhöhe befindet. Dabei wird die Friktionseinrichtung 8 aus der Friktions- in die Freigabestellung umgeschaltet.

Beim Passieren der Umschaltposition in Richtung auf die Endposition in Höhenrichtung, die der Verstauposition in Höhenrichtung entspricht, wird das Betätigungselement 85 betätigt, indem es gegen die Federkraft F von außen gegen das Außenmantelrohr 41 bewegt wird, wie dies in Figur 5 mit dem Pfeil angedeutet ist. Dadurch wird die Reibfläche 851 von der Gleitfläche 43 abgehoben, dass das Spiel zwischen der Reibfläche 851 und der Gleitfläche 43 vergrößert wird, oder zumindest so weit entlastet, dass die wirkende Andruckkraft Af verringert wird. Einer Verstellung der Mantelrohre 41 und 42 wirkt dann nur noch eine verringerte Reibungskraft Rmin entgegen, die kleiner ist als die Reibungskraft Rmax in der Friktionsstellung. Dadurch kann nun das Innenmantelrohr 42 von dem Stellantrieb 42 mit höherer Verstellbeschleunigung und Verstellgeschwindigkeit in Längsrichtung L aus dem Komfort-Positionierbereich in die Verstauposition eingefahren werden können, als in der Friktionsstellung.

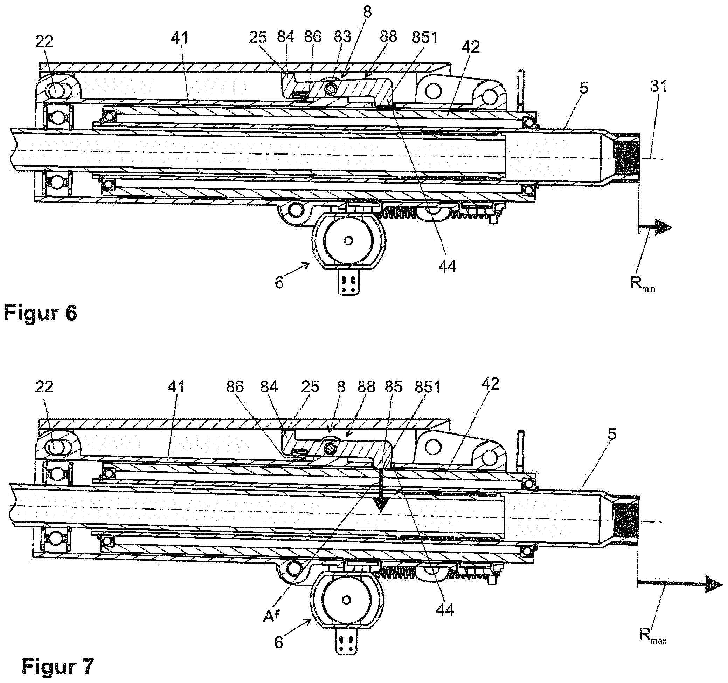

Figur 6 zeigt die Lenksäule 1 in der endgültigen Verstauposition, in der das Innenmantelrohr 42 maximal in Einfahrrichtung E in das Außenmantelrohr eingefahren ist. In dieser Verstauposition befindet sich die Friktionseinrichtung 8 in Freigabestellung. Um das Innenmantelrohr 42 aus dieser Verstauposition in den Komfort-Einstellbereich zu bewegen, kann in der in Figur 6 dargestellten Situation das Innenmantelrohr 42 in Freigabestellung der Friktionseinrichtung 8 von dem Stellantrieb 6 mit hoher Geschwindigkeit in Ausfahrrichtung A aus dem Außenmantelrohr herausbewegt werden, bis die in Figur 5 dargestellte Situation erreicht ist.

Anschließend wird die Stelleinheit 3 von dem Stellantrieb in Höhenrichtung H aus der Verstauposition heraus nach unten bewegt, so dass das Betätigungselement 84 von der Kontaktfläche 25 der Trageinheit 2 gelöst wird und folglich die Friktionseinrichtung 8 in Friktionsstellung umgeschaltet wird, wobei das Reibungselement 75 mit seiner Reibfläche 851 mit der Andruckkraft Af gegen die Gleitfläche 43 andrückt. Dann wirkt die Reibungskraft Rmax, so dass eine hohe Steifigkeit der Stelleinheit 3 gewährleistet ist.

Alternativ ist es zusätzlich möglich, die Stelleinheit 3 aus der in Figur 6 dargestellten Verstauposition durch Verstellen in Höhenrichtung nach unten in Friktionsstellung zu bringen, wie dies in Figur 7 dargestellt ist. Dadurch kann erreicht werden, dass die Manteleinheit 4 auch in der Verstauposition eine hohe Steifigkeit aufweist.

Die Figuren 9 und 10 zeigen weitere Ausgestaltungen der Friktionseinrichtung 8. Bei der Ausführung gemäß Figur 8 ist das die Reibfläche 851 aufweisende Reibungselement 85 als separates Bauelement ausgebildet, welches an dem Hebel 82 befestigt ist. Hierzu ist das Reibungselement 85 in etwa kappenförmig ausgebildet und auf dem der Gleitfläche 43 zugewandten Ende des Hebels 82 angebracht, beispielsweise formschlüssig aufgesteckt, wie dargestellt. Es kann auch alternativ oder zusätzlich stoffschlüssig verbunden sein, beispielsweise verklebt, oder mit Befestigungselementen fixiert. Ebenfalls denkbar und möglich ist eine partielle Umspritzung des Hebels 82 zur Ausbildung des Reibungselements.

Das Material des Reibungselements 85 kann vorzugsweise an das angestrebte Reibungsverhalten angepasst werden. Während beispielsweise der Hebel 82 aus einem Material wie Metall oder Kunststoff bestehen kann, das gut an die im Betrieb zu erwartenden mechanischen Belastungen angepasst ist, kann das Reibungselement 85 aus einem Material mit optimiertem Gleitverhalten bestehen, beispielsweise aus einem Kunststoff wie PTFE, oder zumindest auf der Reibfläche 851 mit einem derartigen Kunststoff beschichtet sein.

Die in Figur 10 dargestellte Ausführung der Friktionseinrichtung 8 weist ebenfalls ein Reibungselement 85 auf, welches ähnlich wie in Figur 8 separat ausgebildet und an dem Hebel 82 angebracht ist. Dabei ist zwischen dem Reibungselement 851 und dem Hebel 82 ein Federelement 87 eingesetzt, welches sich an dem Hebel 82 abstützt und das Reibungselement 851 federnd gegen die Gleitfläche 43 belastet, und zwar wie dargestellt in Friktionsstellung, aber auch bewirkt, dass es in Freigabestellung in Kontakt mit der Gleitfläche 43 bleibt. Die Andruckkraft Af wird elastisch über das Federelement 87 übertragen, welches wie dargestellt als Druckfeder ausgebildet ist. Dadurch lassen sich Durchmessertoleranzen des Innenmantelrohrs 42 während der Komfortverstellung ausgleichen, so dass eine ruhigere und gleichmäßigere Verstellung gewährleistet ist. Wenn die Stelleinheit 3 in die Verstauposition gebracht wird, schlägt das Betätigungselement 84 an der Kontaktfläche 25 der Trageinheit 2 an, und bei der weiteren Bewegung in Höhenrichtung nach oben wird wie beschrieben der gegen das Innenmantelrohr 42 gerichtete Arm von der Gleitfläche 43 weg bewegt. Dabei wird das Federelement 86 allmählich zusammengedrückt und die auf die Reibfläche 851 ausgeübte Andruckkraft Af wird stetig reduziert, so dass beim Umschalten von der Friktionsstellung in die Freigabestellung die Reibungskraft von Rmax entsprechend allmählich auf Rmin verringert wird. Dadurch wird ein abrupter Wechsel vermieden, und die maximalen und minimalen Werte Rmax und Rmin können durch die Eigenschaften des Federelements 87 zur Anpassung des Gleitverhaltens und der Steifigkeit vorgegeben werden. Auf diese Weise kann auch mögliches Spiel in Freigabestellung zwischen Innenmantelrohr 42 und Außenmantelrohr 41 ausgeglichen werden, beispielsweise um Klappergeräusche zu vermeiden.

### Bezugszeichenliste

- 1: Lenksäule
- 2: Trageinheit
- 21: Befestigungsmittel
- 22: Schwenkachse
- 23: Stellhebel
- 24: Achse
- 25: Kontaktfläche
- 3: Stelleinheit
- 31: Längsachse
- 4: Manteleinheit
- 41: Außenmantelrohr
- 42: Innenmantelrohr
- 43: Gleitfläche
- 44: Öffnung
- 5: Lenkspindel
- 51: Befestigungsabschnitt
- 52: inneren Lenkspindel
- 53: äußere Lenkspindel
- 6: Stellantrieb
- 61, 71: Schraubspindel
- 62, 72: Spindelmutter
- 73: Stellmotor
- 64, 74: Getriebe
- 8: Friktionseinrichtung
- 81: Lagerbock
- 82: Hebel
- 83: Hebelachse
- 84: Betätigungselement
- 85: Reibungselement
- 851: Reibfläche
- 86: Feder
- 87: Federelement
- 88: Andruckvorrichtung
- H: Höhenrichtung
- L: Längsrichtung
- E: Einfahrrichtung
- A: Ausfahrrichtung
- F: Federkraft
- Af: Andruckkraft
- Rmin: Reibungskraft
- Rmax: Reibungskraft

## Patentansprüche

1. Motorisch verstellbare Lenksäule (1) für ein Kraftfahrzeug, umfassend eine mit einer Fahrzeugkarosserie verbindbare Trageinheit (2), von der eine Stelleinheit (3) gehalten ist, die eine in einer Manteleinheit (4) um eine Längsachse (31) drehbar gelagerte Lenkspindel (5) umfasst, wobei die Manteleinheit (4) ein Außenmantelrohr (41) aufweist, in dem ein Innenmantelrohr (42) in Richtung der Längsachse (31) teleskopierend axial verschiebbar aufgenommen ist, und mit einem Stellantrieb (6), der mit dem Innenmantelrohr (42) und dem Außenmantelrohr (41) verbunden ist und von dem das Innenmantelrohr (42) relativ zum Außenmantelrohr (41) axial ein- und ausschiebbar ist,
**dadurch gekennzeichnet,**
**dass** zwischen dem Außenmantelrohr (41) und dem Innenmantelrohr (42) eine Friktionseinrichtung (8) angeordnet ist, von der eine Reibungskraft zwischen Außenmantelrohr (41) und Innenmantelrohr (42) bezüglich einer relativen Verschiebung aufbringbar ist und die verstellbar ist zwischen einer Freigabestellung und mindestens einer Friktionsstellung, wobei die Reibungskraft in Friktionsstellung (Rmax) höher ist als in Freigabestellung und wobei die Reibungskraft in Freigabestellung (Rmin) und in Friktionsstellung (Rmax) kleiner ist als eine von dem Stellantrieb (6) zwischen dem Außenmantelrohr (41) und Innenmantelrohr (42) ausübbare axiale Verstellkraft.

2. Lenksäule, nach Anspruch 1, **dadurch gekennzeichnet, dass** die von dem Stellantrieb (6) für die Verstellung zwischen dem Außenmantelrohr (41) und dem Innenmantelrohr (42) aufzubringende Leistung in Freigabestellung und in Friktionsstellung gleich ist.

3. Lenksäule, nach einem der vorangehenden Ansprüche, **dadurch gekennzeichnet, dass** die Stelleinheit (3) an der Trageinheit (2) um eine quer zur Längsachse liegende Schwenkachse (22) höhenverschwenkbar gelagert ist.

4. Lenksäule, nach Anspruch 3, **dadurch gekennzeichnet, dass** ein elektrischer Höhen-Stellantrieb mit der Trageinheit (2) und der Stelleinheit (3) verbunden ist, von dem die Stelleinheit (3) relativ zur Trageinheit (2) um die Schwenkachse (22) bewegbar ist.

5. Lenksäule, nach einem der vorangehenden Ansprüche, **dadurch gekennzeichnet, dass** die Friktionseinrichtung (8) an dem Außenmantelrohr (41) angebracht ist.

6. Lenksäule nach einem der vorangehenden Ansprüche, **dadurch gekennzeichnet, dass** die Friktionseinrichtung (8) eine Andruckvorrichtung (88) und mindestens ein Reibungselement (85) mit einer Reibfläche (851) aufweist, wobei die Andruckvorrichtung (88) die Reibfläche (851) in Friktionsstellung mit einer vorbestimmten Andrucckraft (A) gegen eine Gleitfläche (43) am Innenmantelrohr (42) andrückt.

7. Lenksäule nach Anspruch 6, **dadurch gekennzeichnet, dass** zwischen der Andruckvorrichtung (88) und dem Reibungselement (85) ein Federelement (87) angeordnet ist.

8. Lenksäule nach Anspruch 6, **dadurch gekennzeichnet, dass** das Reibungselement (85) in einer in Längsrichtung begrenzten Durchbrechung (44) in dem Außenmantelrohr (41) angeordnet ist.

9. Lenksäule nach Anspruch 6, **dadurch gekennzeichnet, dass** die Andruckvorrichtung (88) ein Andruckelement (86) aufweist, welches sich am Außenmantelrohr (41) oder an der Trageinheit (2) abstützt.

10. Lenksäule, nach Anspruch 6, **dadurch gekennzeichnet, dass** die Andruckvorrichtung ein Betätigungselement (84) aufweist, welches aktivierbar ist zur Einstellung der Freigabestellung, wobei die Reibfläche (851) von der Gleitfläche (43) am Innenmantelrohr (42) gelöst ist oder zumindest die Andruckkraft (A) gegenüber der Friktionsstellung verringert ist.

11. Lenksäule, nach Anspruch 10, **dadurch gekennzeichnet, dass** das Betätigungselement durch Verschwenken der Stelleinheit (3) um die Schwenkachse (22) in Wirkeingriff bringbar ist mit der Trageinheit (2) zur Einstellung der Freigabestellung.

12. Lenksäule, nach Anspruch 10, **dadurch gekennzeichnet, dass** die Andruckvorrichtung (8) einen an dem Außenmantelrohr (41) schwenkbar gelagerten Hebel (82) aufweist, der das Betätigungselement (84) und ein Reibungselement (85) aufweist.

13. Lenksäule, nach einem der vorangehenden Ansprüche, **dadurch gekennzeichnet, dass** eine Energieabsorptionseinrichtung zwischen der Trageinheit (2) und der Stelleinheit (3) oder dem Außenmantelrohr (41) und dem Innenmantelrohr (42) angeordnet ist.

14. Verfahren zur Verstellung einer Lenksäule (1) nach einem der vorangehenden Ansprüche, **gekennzeichnet dadurch, dass** bei der Verstellung der Stelleinheit (3) mittels eines Stellantriebs (6)
beim Verstellen in Betriebsstellung der Lenksäule (1) innerhalb eines Komfort-Einstellbereichs eine Friktionseinrichtung (8) in Friktionsstellung gebracht wird, und
- beim Verstauen der Lenksäule in Verstauposition die Friktionseinrichtung (8) außerhalb des Komfort-Einstellbereichs in Freigabestellung gebracht wird,
wobei in Friktionsstellung die Reibungskraft und die Steifigkeit der Verbindung zwischen dem Außenmantelrohr (41) und dem Innenmantelrohr (42) größer ist als in Freigabestellung.

15. Verfahren nach Anspruch 14, **dadurch gekennzeichnet, dass** die Friktionseinrichtung (8) beim Erreichen einer Schaltposition durch Verschwenken der Stelleinheit (3) um die Schwenkachse (22) in Richtung auf die Verstauposition in Freigabestellung gebracht wird.

## Claims

1. Motor-adjustable steering column (1) for a motor vehicle, comprising a supporting unit (2) which is connectable with a vehicle body and by which an actuating unit (3) is held which comprises a steering spindle (5) mounted in a casing unit (4) so as to be rotatable about a longitudinal axis (31), the casing unit (4) having an outer casing tube (41), in which an inner casing tube (42) is accommodated so as to be axially displaceable telescopically in the direction of the longitudinal axis (31), and having an actuating drive (6), which is connected with the inner casing tube (42) and the outer casing tube (41) and by which the inner casing tube (42) may be displaced axially in and out relative to the outer casing tube (41),
**characterized in that**
a friction means (8) is arranged between the outer casing tube (41) and the inner casing tube (42), by which friction means (8) a frictional force may be applied between outer casing tube (41) and inner casing tube (42) with regard to relative displacement and which is adjustable between a release position and at least one friction position, wherein the frictional force is higher in the friction position (Rmax) than in the release position and wherein the frictional force is lower in the release position (Rmin) and in the friction position (Rmax) than an axial adjusting force which can be exerted by the actuating drive (6) between the outer casing tube (41) and the inner casing tube (42) .

2. Steering column according to Claim 1, **characterized in that** the power to be applied by the actuating drive (6) for adjustment between the outer casing tube (41) and the inner casing tube (42) is the same in the release position and in the friction position.

3. Steering column according to one of the preceding claims, **characterized in that** the actuating unit (3) is mounted on the supporting unit (2) so as to be vertically pivotable about a pivot pin (22) extending transversely of the longitudinal axis.

4. Steering column according to Claim 3, **characterized in that** an electrical vertical actuating drive is connected with the supporting unit (2) and the actuating unit (3) by which the actuating unit (3) may be moved relative to the supporting unit (2) about the pivot pin (22).

5. Steering column according to one of the preceding claims, **characterized in that** the friction means (8) is attached to the outer casing tube (41).

6. Steering column according to one of the preceding claims, **characterized in that** the friction means (8) comprises a pressure device (88) and at least one friction element (85) with a friction surface (851), wherein, in the friction position, the pressure device (88) presses the friction surface (851) with a predetermined contact pressure (A) against a sliding surface (43) on the inner casing tube (42).

7. Steering column according to Claim 6, **characterized in that** a spring element (87) is arranged between the pressure device (88) and the friction element (85) .

8. Steering column according to Claim 6, **characterized in that** the friction element (85) is arranged in a hole (44) delimited in the longitudinal direction in the outer casing tube (41).

9. Steering column according to Claim 6, **characterized in that** the pressure device (88) comprises a pressure element (86), which rests against the outer casing tube (41) or against the supporting unit (2).

10. Steering column according to Claim 6, **characterized in that** the pressure device comprises an operating element (84) which may be activated to set the release position, wherein the friction surface (851) is released from the sliding surface (43) on the inner casing tube (42) or at least the contact pressure (A) is reduced relative to the friction position.

11. Steering column according to Claim 10, **characterized in that** the operating element may, by pivoting the actuating unit (3) about the pivot pin (22), be brought into active engagement with the supporting unit (2) to set the release position.

12. Steering column according to Claim 10, **characterized in that** the pressure device (8) comprises a lever (82) mounted pivotably on the outer casing tube (41), which lever comprises the operating element (84) and a friction element (85).

13. Steering column according to one of the preceding claims, **characterized in that** an energy-absorbing means is arranged between the supporting unit (2) and the actuating unit (3) or the outer casing tube (41) and the inner casing tube (42).

14. Method for adjusting a steering column (1) according to one of the preceding claims, **characterized in that** on adjustment of the actuating unit (3) by means of an actuating drive (6),
- during adjustment into a steering column (1) operating position within a comfort setting range, a friction means (8) is moved into the friction position, and
- during stowing of the steering column into the stowage position the friction means (8) is moved into a release position outside the comfort setting range,
wherein in the friction position the frictional force and the rigidity of the connection between the outer casing tube (41) and the inner casing tube (42) are greater than in the release position.

15. Method according to Claim 14, **characterized in that** the friction means (8) is brought into the release position on reaching a switching position by pivoting the actuating unit (3) about the pivot pin (22) towards the stowage position.

## Revendications

1. Colonne de direction (1), réglable par moteur, destinée à un véhicule automobile, comprenant une unité de support (2), pouvant être reliée à une carrosserie de véhicule et supportant une unité de réglage (3) qui comprend un arbre de direction (5) monté à rotation sur un axe longitudinal (31) dans une unité d'enveloppe (4), l'unité d'enveloppe (4) comportant un tube d'enveloppe extérieur (41) dans lequel un tube d'enveloppe intérieur (42) est reçu de façon à pouvoir coulisser axialement et de manière télescopique dans la direction de l'axe longitudinal (31), et un actionneur (6), qui est relié au tube d'enveloppe intérieur (42) et au tube d'enveloppe extérieur (41) et qui permet d'escamoter ou de déployer le tube d'enveloppe intérieur (42) axialement par rapport au tube d'enveloppe extérieur (41),
**caractérisé en ce que**
un dispositif de friction (8) est disposé entre le tube d'enveloppe extérieur (41) et le tube d'enveloppe intérieur (42), et permet d'appliquer une force de friction entre le tube d'enveloppe extérieur (41) et le tube d'enveloppe intérieur (42) par rapport à un coulissement relatif et est réglable entre une position de libération et au moins une position de friction, et peut être déplacé entre une position de libération et une position de friction, la force de friction dans la position de friction (Rmax) étant supérieure à celle dans la position de libération et la force de friction dans la position de libération (Rmin) et dans la position de friction (Rmax) étant inférieure à celle d'une force de déplacement axial pouvant être exercée par l'actionneur (6) entre le tube d'enveloppe extérieur (41) et le tube d'enveloppe intérieur (42).

2. Colonne de direction, selon la revendication 1, **caractérisée en ce que** la puissance appliquée par l'actionneur (6) pour se déplacer entre le tube d'enveloppe extérieur (41) et le tube d'enveloppe intérieur (42) est la même dans la position de libération et dans la position de friction.

3. Colonne de direction, selon l'une des revendications précédentes, **caractérisée en ce que** l'unité de réglage (3) est montée sur l'unité de support (2) de manière à pouvoir pivoter en hauteur sur un axe de pivotement (22) transversal à l'axe longitudinal.

4. Colonne de direction selon la revendication 3, **caractérisée en ce qu'**un entraînement électrique de réglage en hauteur est relié à l'unité de support (2) et à l'unité de réglage (3) et permet de déplacer l'unité de réglage (3) par rapport à l'unité de support (2) autour de l'axe de pivotement (22).

5. Colonne de direction selon l'une des revendications précédentes, **caractérisée en ce que** le dispositif de friction (8) est monté sur le tube d'enveloppe extérieur (41) .

6. Colonne de direction selon l'une des revendications précédentes, **caractérisée en ce que** le dispositif de friction (8) comporte un dispositif de pression (88) et au moins un élément de friction (85) pourvu d'une surface de friction (851), le dispositif de pression (88) pressant la surface de friction (851) dans la position de friction avec une force de pression prédéterminée (A) contre une surface de glissement (43) au niveau du tube d'enveloppe intérieur (42).

7. Colonne de direction selon la revendication 6, **caractérisée en ce qu'**un élément à ressort (87) est disposé entre le dispositif de pression (88) et l'élément de friction (85).

8. Colonne de direction selon la revendication 6, **caractérisée en ce que** l'élément de friction (85) est disposé dans un passage (44) délimité longitudinalement dans le tube d'enveloppe extérieur (41).

9. Colonne de direction selon la revendication 6, **caractérisée en ce que** le dispositif de pression (88) comporte un élément de pression (86) qui prend appui sur le tube d'enveloppe extérieur (41) ou sur l'unité de support (2).

10. Colonne de direction selon la revendication 6, **caractérisée en ce que** le dispositif de pression comporte un élément d'actionnement (84) pouvant être activé pour régler la position de libération, la surface de friction (851) étant détachée de la surface de glissement (43) au niveau du tube d'enveloppe intérieur (42) ou au moins la force de pression (A) étant réduite par rapport à la position de friction.

11. Colonne de direction selon la revendication 10, **caractérisée en ce que** l'élément d'actionnement peut être amené en engagement fonctionnel, par pivotement de l'unité de réglage (3) sur l'axe de pivotement (22), avec l'unité de support (2) pour régler la position de libération.

12. Colonne de direction selon la revendication 10, **caractérisée en ce que** le dispositif de pression (8) comporte un levier (82) qui est monté à pivotement sur le tube d'enveloppe extérieur (41) et qui comporte l'élément d'actionnement (84) et un élément de friction (85) .

13. Colonne de direction selon l'une des revendications précédentes, **caractérisée en ce qu'**un dispositif d'absorption d'énergie est disposé entre l'unité de support (2) et l'unité de réglage (3) ou le tube d'enveloppe extérieur (41) et le tube d'enveloppe intérieur (42).

14. Procédé de réglage d'une colonne de direction (1) selon l'une des revendications précédentes, **caractérisé en ce que**, lors du réglage de l'unité de réglage (3) au moyen d'un actionneur (6),
- un dispositif de friction (8) est amené, dans la position de friction, à l'intérieur d'une zone de réglage de confort lors du déplacement dans la position de fonctionnement de la colonne de direction (1) et
- le dispositif de friction (8) est amené, dans la position de libération, à l'extérieur de la zone de réglage de confort, lors du rangement de la colonne de direction en position rangée,
la force de frottement et la rigidité de la liaison entre le tube d'enveloppe extérieur (41) et le tube d'enveloppe intérieur (42) étant supérieures dans la position de friction à celle dans la position de libération.

15. Procédé selon la revendication 14, **caractérisé en ce que**, lorsqu'une position de commutation est atteinte, le dispositif de friction (8) est amené dans la position de libération par pivotement de l'unité de réglage (3) sur l'axe de pivotement (22) en direction de la position de rangement.
